# FASCICULE DE BREVET EUROPEEN

(11) **EP 3 523 164 B1**
(45) Date de publication et mention de la délivrance du brevet: **09.09.2020**
(21) Numéro de dépôt: 17758500.7
(22) Date de dépôt: 24.08.2017
(51) Int. Cl.: B60S 1/16, F16H 21/40, F16H 55/00

(54) **ROUE DENTÉE POUR UN MOTORÉDUCTEUR D'ESSUIE-GLACE**
ZAHNRAD FÜR EINEN GETRIEBEMOTOR EINES SCHEIBENWISCHERS
TOOTHED WHEEL FOR A GEAR MOTOR OF A WINDOW WIPER

(30) Priorité: 07.10.2016 FR 1659680
(43) Date de publication de la demande: 14.08.2019
(73) Titulaire: Valeo Systèmes d'Essuyage, 78322 Le Mesnil Saint Denis (FR)
(72) Inventeur: JABLY, Fabrice, 86108 Chatellerault (FR); RABACHE, Christophe, 86108 Chatellerault (FR); SERVIN, Alain, 86108 Chatellerault (FR)
(74) Mandataire: Valeo Vision
(86) Numéro de dépôt international: PCT/EP2017/071307
(87) Numéro de publication internationale: WO 2018/065148

(56) Documents cités:
- EP-A1- 2 639 119
- DE-A1- 3 405 299
- US-A1- 2010 011 892

## Description

### DOMAINE TECHNIQUE

La présente invention concerne notamment une roue dentée pour un motoréducteur d'essuie-glace, en particulier de véhicule automobile.

### ETAT DE L'ART

Un motoréducteur d'essuie-glace comprend un moteur électrique dont l'arbre de rotor se prolonge en dehors du moteur par une vis sans fin qui pénètre dans un carter creux fermé par un couvercle. Ce carter comporte, dans son volume creux, un réducteur comportant une roue dentée entraînée en rotation par la vis sans fin et entraînant par l'intermédiaire d'un pion excentré engagé dans un orifice de ladite roue de manière libre en rotation et en translation axiale, un système d'embiellage relié de manière fixe audit pion. Ce système d'embiellage permet de transformer le mouvement de rotation continue de cette roue en un mouvement de rotation alternée à un arbre traversant le fond du carter ou couvercle et entraînant un dispositif d'essuyage à lame racleuse.

L'assemblage du système d'embiellage et de la roue dentée comprend une étape dans laquelle le pion précité est engagé dans l'orifice de la roue dentée. Cet assemblage est actuellement réalisé manuellement et nécessite de la dextérité car le geste d'assemblage n'est pas simple. Il nécessite en outre une durée d'assemblage non négligeable. DE-A-3405299 montre le préambule de la revendication 1.

L'invention propose un perfectionnement à cette technologie, qui est simple, efficace et économique, et autorise un assemblage automatique d'un système d'embiellage et d'une roue dentée.

### EXPOSE DE L'INVENTION

L'invention propose à cet effet une roue dentée pour un motoréducteur d'essuie-glace, en particulier de véhicule automobile, cette roue présentant un organe central définissant un axe de rotation A, et deux faces opposées sensiblement parallèles, une première desdites faces comportant un orifice d'axe B destiné à recevoir un pion d'un système d'embiellage du motoréducteur, caractérisée en ce qu'elle comprend, au niveau de ladite première face, des moyens de butée dans une direction axiale et/ou dans une direction radiale vis-à-vis de l'axe A, et des moyens de guidage par glissement dans une direction circonférentielle autour de l'axe A, lesdits moyens de butée et de guidage étant configurés pour coopérer avec ledit pion lors de l'assemblage de la roue dentée avec le système d'embiellage pour faciliter l'insertion du pion dans l'orifice.

Des moyens de butée et de guidage sont ainsi prévus et configurés sur la roue dentée de façon à pouvoir coopérer avec le pion du système d'embiellage et autoriser ainsi un assemblage automatique ou commandé de la roue dentée et du système d'embiellage. Ceci est avantageux dans la mesure où une opération manuelle relative longue et complexe est remplacée par une opération automatique, limitant ainsi le nombre d'erreurs et le risque de mauvais montage.

La roue dentée selon l'invention peut comprendre une ou plusieurs des caractéristiques suivantes, prises isolément les unes des autres ou en combinaison les unes avec les autres :
- la roue dentée comprend, au niveau de ladite première face, un fût cylindrique d'axe A entouré par une couronne dentée et reliée à cette dernière par des nervures,
- les moyens de butée comprennent des premiers moyens de butée en direction radiale,
- les premiers moyens de butée sont formés par ou situés sur ledit fût,
- les moyens de butée comprennent des deuxièmes moyens de butée en direction axiale,
- les deuxièmes moyens de butée sont formés par une nervure de butée,
- la nervure de butée a une orientation sensiblement circonférentielle autour de l'axe A,
- les moyens de butée comprennent des troisièmes moyens de butée en direction circonférentielle,
- les troisièmes moyens de butée sont formés par le fond d'un berceau de forme générale en C ou U,
- ledit berceau s'étend autour dudit axe B,
- les moyens de guidage comprennent une première surface cylindrique externe s'étendant autour dudit axe A ou une portion d'une telle surface,
- la première surface est formée par ou située sur ledit fût,
- les moyens de guidage comprennent une deuxième surface plane sensiblement perpendiculaire audit axe A,
- la deuxième surface est formée par ou située sur ladite nervure de butée,
- les moyens de guidage comprennent une troisième surface cylindrique interne s'étendant autour dudit axe A ou une portion d'une telle surface,
- ledit organe central est un deuxième orifice, et
- la troisième surface est formée par ou située sur une nervure de guidage.

La présente invention concerne également un motoréducteur d'essuie-glace, en particulier de véhicule automobile, comprenant au moins une roue dentée telle que décrite ci-dessus.

La présente invention concerne encore un système d'essuyage d'une vitre, en particulier de véhicule automobile, comprenant au moins une roue dentée ou un motoréducteur tel que décrit ci-dessus.

La présente invention concerne enfin un procédé d'assemblage d'un ensemble comportant une roue dentée selon l'une des revendications précédentes et un système d'embiellage pour un motoréducteur d'essuie-glace, en particulier de véhicule automobile, comprenant les étapes consistant à :
a) déplacer un des éléments parmi le système d'embiellage et la roue dentée vers l'autre des éléments, par translation axiale et/ou radiale vis-à-vis de l'axe A, depuis une première position espacée dans laquelle l'axe C du pion dudit système est sensiblement parallèle à l'axe A, jusqu'à une deuxième position de contact dans laquelle ledit pion est en contact axial et/ou radial contre lesdits moyens de butée,
b) déplacer un de ces éléments en rotation autour de l'axe A par rapport à l'autre des éléments, par glissement du pion sur lesdits moyens de guidage, depuis la deuxième position précitée jusqu'à une troisième position dans laquelle les axes B et C sont confondus, et
c) déplacer un de ces éléments vers l'autre des éléments, par translation axiale vis-à-vis de l'axe A, depuis la troisième position jusqu'à une quatrième position dans laquelle le pion est engagé dans ledit orifice.

Dans la deuxième position, le pion est de préférence en contact radial et axial contre la roue dentée.

Dans la troisième position, le pion est de préférence en contact circonférentiel contre la roue dentée.

Avantageusement, les étapes a), b) et c) sont réalisées par des moyens robotisés.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés, dans lesquels :
- la figure 1 est une vue schématique en perspective d'un motoréducteur d'essuie-glace, avec arrachement partiel,
- la figure 2 est une vue schématique en perspective d'une roue dentée du motoréducteur de la figure 1,
- la figure 3 est une vue schématique en perspective d'une roue dentée selon l'invention,
- les figures 4a à 4d sont des vues schématiques en perspective de la roue dentée de la figure 3 et d'un système d'embiellage, et illustrent des étapes d'assemblage de ces éléments, et
- la figure 5 est une vue très schématique d'un véhicule équipé d'un système d'essuyage comportant un motoréducteur selon l'invention.

### DESCRIPTION DETAILLEE

Il faut noter que les figures exposent l'invention de manière détaillée pour mettre en oeuvre l'invention, lesdites figures pouvant bien entendu servir à mieux définir l'invention le cas échéant.

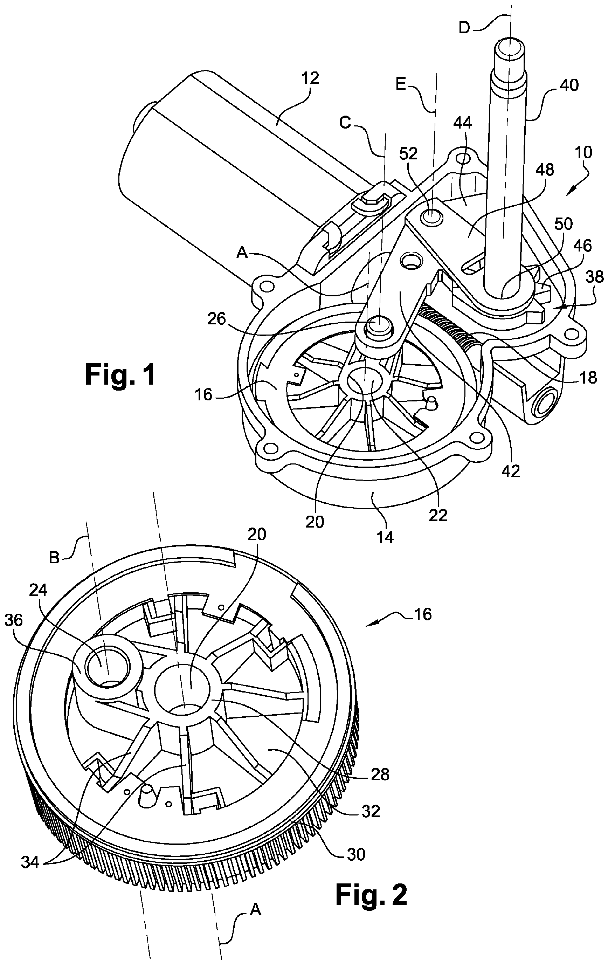

On se réfère d'abord à la figure 1 qui représente un motoréducteur 10 d'essuie-glace, qui comprend un moteur électrique 12 et un carter creux 14 muni d'une plaque ou d'un couvercle de fermeture (non représenté).

Ce carter 14 contient un réducteur constitué d'une roue dentée 16 mobile en rotation autour d'un axe A et entraînée par une vis sans fin 18 issue du rotor du moteur électrique 12.

La roue 16, mieux visible à la figure 2, comprend un orifice central 20 d'axe A et destiné à recevoir un doigt cylindrique 22 du carter 14. Le doigt 22 peut en variante être rapporté dans un logement cylindrique du carter 14. La roue 16 comprend un autre orifice 24, excentré, d'axe B et destiné à recevoir un pion cylindrique 26 d'axe C. Le pion 26 est libre en rotation et en translation dans l'orifice 24. En position d'assemblage, les axes A et B sont sensiblement parallèles et les axes B et C sont confondus.

La roue dentée 16 comprend ici un fût central 28 d'axe A et dont l'alésage interne définit l'orifice 20. Ce fût 28 est relié à une couronne 30 à denture externe par un voile 32 plan sensiblement perpendiculaire à l'axe A. Au niveau d'au moins une des faces de la roue (celle visible à la figure 2, que l'on appellera face supérieure dans ce qui suit), le fût 28 est relié à la couronne 30 par des nervures 34 sensiblement radiales. La roue comprend en outre, au niveau de la face supérieure, une douille 36 d'axe B et dont l'alésage interne définit l'orifice 24. Les extrémités axiales (vis-à-vis de l'axe A) libres du fût 28 et de la douille 36, situées du côté de la face supérieure, sont situées dans des plans perpendiculaires à l'axe A qui sont distincts et espacés du plan du voile 32.

Le pion 26 est relié à un système d'embiellage, ici à engrenage, 38 qui permet de transformer le mouvement de rotation continue de la roue 16 en mouvement de rotation alternée à un arbre 40 d'axe D. L'arbre 40 est logé dans un logement situé au fond du carter 14 en reposant sur un palier, non visible.

Le système d'embiellage 38 est composé d'une bielle 42, reliée à l'une de ses extrémités au pion 26 en laissant dépasser, au delà de sa face externe, un tronçon d'extrémité du pion 26, et présentant à l'autre extrémité un secteur denté 44. Ce secteur denté s'engrène en avec un autre secteur denté 46, lié de manière fixe à l'arbre 40.

Les deux secteurs dentés 44 et 46 sont maintenus constamment en prise grâce à deux balanciers 48, situés de part et d'autre des faces longitudinales des secteurs dentés, en formant une manivelle et en permettant de relier rigidement la bielle 42 et l'arbre 40.

Ces deux balanciers 48 sont maintenus ensemble, d'une part par l'intermédiaire d'une ouverture 50 prévue à une extrémité desdits balanciers et qui vient entourer une extrémité de l'arbre 10, et d'autre part par un pivot 52 d'axe E, libre en rotation, disposé à l'autre extrémité desdits balanciers. Les deux balanciers ont ainsi un mouvement de rotation autour de l'arbre 40. Les axes A, B, C, D et E sont sensiblement parallèles.

Le pivot 52 a sa partie centrale qui s'insère avec un jeu minime dans la bielle 42, ses deux extrémités étant engagées dans des alésages des deux balanciers 48.

Le pivot 52 a une dimension axiale supérieure à l'épaisseur réunie des deux balanciers 48 et de la bielle 42 de manière à dégager deux extrémités qui dépassent de part et d'autre des balanciers. Les deux balanciers 48 sont montés serrés sur le pivot 52.

Les figures 1 et 2 représentent un motoréducteur 10 connu, dont l'assemblage de la roue dentée 16 avec le système d'embiellage 38 est réalisé manuellement, ce qui présente des inconvénients comme évoqué dans ce qui précède.

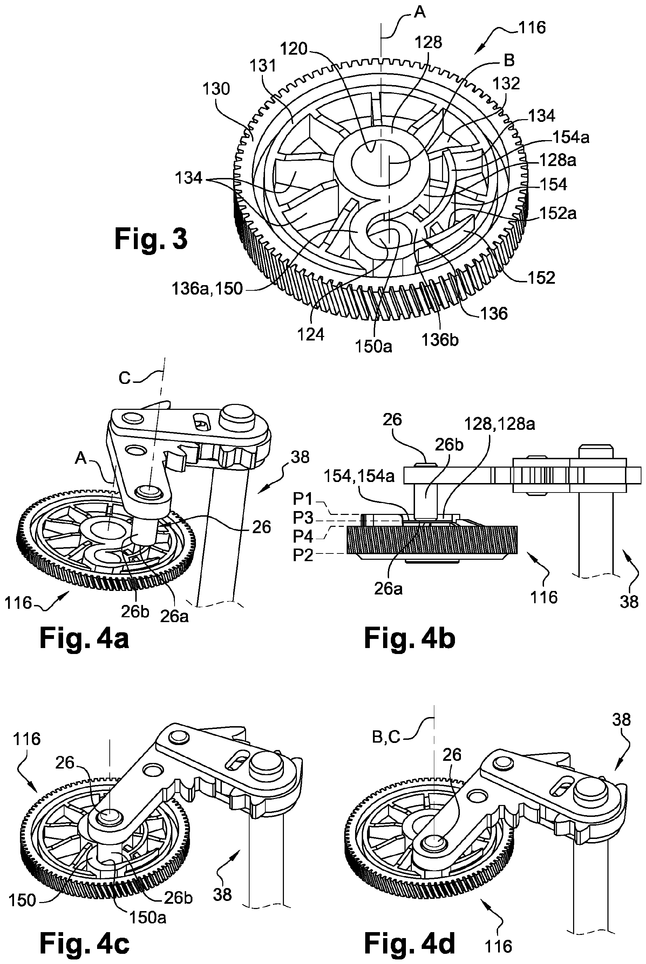

La figure 3 montre une roue dentée selon un mode de réalisation de l'invention.

Dans l'exemple représenté qui n'est nullement limitatif, la roue dentée 116 comprend une structure générale similaire à celle de la roue 16 de la figure 2 et comprend un fût central 128 dont l'alésage interne définit un orifice 120 d'axe A. Ce fût 128 est relié à une couronne 130 à denture externe par un voile 132 plan sensiblement perpendiculaire à l'axe A.

Au niveau d'au moins une des faces de la roue (celle visible à la figure 3), le fût 128 est relié à des nervures 134 sensiblement radiales qui s'étendent radialement vers l'extérieur jusqu'à la couronne 130 ou une nervure circulaire 131 s'étendant entre le fût et la couronne. La nervure 131 peut être comprise comme faisant partie de la couronne 130. La roue 116 comprend en outre, au niveau de cette même face, une douille 136 dont l'alésage interne définit l'orifice 124 d'axe B. Les axes A et B sont sensiblement parallèles.

Dans l'exemple représenté, le plan P1 passant par l'extrémité axiale libre du fût 128, située du côté de la face précitée, est distant de celui P2 passant par le voile 132 (cf. figure 3a).

La douille 136 est ici étagée axialement et comprend un premier secteur angulaire 136a dont l'extrémité axiale libre située du côté de la face supérieure, s'étend sensiblement dans le plan P1. La douille 136 comprend un second secteur angulaire 136b, le secteur restant ou complémentaire, qui s'étend dans un plan P3 parallèle à P1 et situé entre P1 et P2 (cf. figure 3a).

Le premier secteur 136a a une étendue angulaire autour de l'axe B supérieure ou égale à 180°. Il forme un berceau 150 de forme générale en C ou U dont l'ouverture est orientée dans une direction circonférentielle autour de l'axe A. Une extrémité circonférentielle radialement interne de ce secteur 136a ou du berceau 150 est reliée au fût 128. L'extrémité circonférentielle opposée, radialement externe, est située au niveau de la nervure 131 et est reliée à une autre nervure 152 dite de guidage.

La nervure de guidage 152 a une orientation circonférentielle autour de l'axe A et s'étend à la fois circonférentiellement dans le prolongement de l'extrémité circonférentielle externe du berceau 150 et axialement dans le prolongement de la nervure 131. Les extrémités axiales libres (situées du côté de la face précitée) de la nervure 152, du berceau 150 et du fût 128 sont sensiblement coplanaires, dans le plan P1. L'extrémité axiale libre, située du même côté, de la nervure 131, est située dans un plan P4 situé entre les plans P3 et P2, et parallèles à ces derniers.

Une autre nervure de guidage 154, d'orientation générale circonférentielle autour de l'axe A, s'étend entre le fût 128 et la nervure 131. La nervure 154 a donc un rayon compris entre le rayon externe du fût 128 et le rayon de la nervure 131 ou de la nervure 152. La nervure 154 a une extrémité circonférentielle libre ou reliée à une des nervures 134, et l'autre qui est reliée à la douille 136, et en particulier à son second secteur 136b. Les extrémités supérieures libres de la nervure 154 et de la douille 136, situées du côté de la face précitée, sont coplanaires, dans le plan P3. Les extrémités supérieures libres des nervures radiales 134 ne sont pas forcément planes et s'étendent entre les plans P3 et P4.

La surface cylindrique externe 128a du fût 128 définit des premiers moyens de butée au sens de l'invention, qui sont destinés à coopérer par butée avec la surface cylindrique externe d'un pion de système d'embiellage, comme cela sera décrit plus en détail dans ce qui suit. Cette surface 128a définit des moyens de butée en direction radiale, ici vers l'intérieur (de l'axe A). La surface cylindrique externe 128a du fût 128 définit en outre des moyens de guidage, qui sont destinés à coopérer par glissement avec la surface cylindrique externe du pion.

La surface d'extrémité supérieure 154a de la nervure 154 définit des seconds moyens de butée, qui sont destinés à coopérer par butée axiale avec la face d'extrémité libre du pion du système d'embiellage. La surface d'extrémité supérieure 154a de la nervure 154 définit en outre des moyens de guidage dans le plan P3, qui sont destinés à coopérer par glissement avec la face d'extrémité libre du pion. C'est également le cas de la surface d'extrémité supérieure du second secteur 136b de la douille 136, qui s'étend dans le plan P3.

La surface cylindrique interne 150a du berceau 150 définit des moyens de butée, qui sont destinés à coopérer par butée circonférentielle avec la surface cylindrique externe du pion.

La surface cylindrique radialement interne 152a de la nervure 152 définit des moyens de guidage, qui sont destinés à coopérer par glissement avec la surface cylindrique externe du pion.

Les figures 4a à 4d illustrent des étapes d'assemblage de la roue dentée 116 de la figure 3 avec un système d'embiellage 38 du type de celui décrit dans ce qui précède en référence à la figure 1.

Les étapes du procédé sont de préférence réalisées de manière automatique, par des moyens commandés comportant par exemple un bras robotisé.

Une première étape du procédé, illustrée à la figure 4a, consiste à positionner la roue dentée 116 et le système d'embiellage 38 au voisinage immédiat l'un de l'autre, le système étant situé du côté de la face précitée, supérieure, de la roue dentée. Ils sont alors dans une première position, appelée position espacée, dans laquelle l'axe C du pion 26 du système 38 est sensiblement parallèle à l'axe A. La face d'extrémité inférieure 26a du pion est à distance axiale et de la roue, et la face cylindrique extérieure 26b du pion est à distance radiale et circonférentielle de la roue.

Une autre étape du procédé représentée à la figure 4b consiste à déplacer un des éléments parmi le système d'embiellage 38 et la roue dentée 116 vers l'autre des éléments, par translation axiale et/ou radiale vis-à-vis de l'axe A, depuis la première position précitée jusqu'à une deuxième position de contact dans laquelle le pion 26 est en contact axial et/ou radial contre la roue. Dans la deuxième position, les axes A et C sont toujours parallèles. Dans l'exemple représenté, une translation axiale de l'un des éléments vers l'autre des éléments permet à la face 26a du pion 26 de venir en butée axiale sur la surface 154a de la nervure 154 (figure 3). Une translation radiale de l'un des éléments vers l'autre des éléments (radialement vers l'intérieur pour le pion et le système, ou radialement vers l'extérieur pour la roue) permet à la face 26b du pion 26 de venir en butée axiale sur la surface 128a du fût 128 (figure 3). Une force peut être appliquée par le bras robot pour maintenir le pion au contact de la roue, sur ses surfaces 154a et 128a.

Une autre étape du procédé représentée à la figure 4c consiste à déplacer un des éléments parmi le système d'embiellage 38 et la roue dentée 116 vers l'autre des éléments, par rotation ou translation circonférentielle autour de l'axe A, depuis la deuxième position précitée jusqu'à une troisième position de contact dans laquelle le pion 26 est en contact circonférentiel contre la roue. Les contacts axial et radial évoqués dans ce qui précède sont de préférence conservés. Dans l'exemple représenté, la rotation permet à la face 26b du pion 26 de venir en butée circonférentielle sur la surface 150a du berceau 150 (figure 3). La rotation est facilitée par la coopération par glissement des faces 26a, 26b du pion respectivement sur les surfaces 154a et 128a, voire également sur la surface 152a (figure 3). Dans la troisième position, les axes B et C sont confondus.

Une autre étape du procédé représentée à la figure 4d consiste à déplacer un des éléments parmi le système d'embiellage 38 et la roue dentée 116 vers l'autre des éléments, par translation axiale, depuis la troisième position précitée jusqu'à une quatrième position dans laquelle le pion est engagé dans l'orifice 124 de la roue 116.

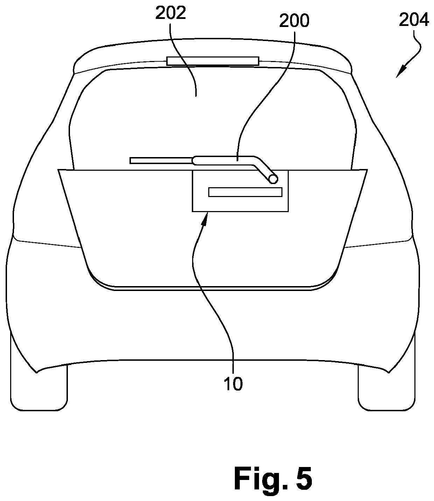

La figure 5 montre un véhicule automobile 204 équipé d'un système 200 d'essuyage d'au moins l'une de ses vitres 202. Classiquement, ce système comprend un essuie-glace 206 entraîné dans un mouvement de va et vient au moyen d'un motoréducteur 10 du type de celui décrit dans ce qui précède, et équipé d'une roue 116 telle que celle représentée à la figure 3.

## Revendications

1. Roue dentée (116) pour un motoréducteur (10) d'essuie-glace, en particulier de véhicule automobile, cette roue présentant un organe central (120, 128) définissant un axe de rotation A, et deux faces opposées sensiblement parallèles, une première desdites faces comportant un orifice (124) d'axe B destiné à recevoir un pion (26) d'un système d'embiellage (38) du motoréducteur, **caractérisée en ce qu'**elle comprend, au niveau de ladite première face, des moyens (128a, 154a) de butée dans une direction axiale et/ou dans une direction radiale vis-à-vis de l'axe A, et des moyens (128a, 154a, 152a) de guidage par glissement dans une direction circonférentielle autour de l'axe A, lesdits moyens de butée et de guidage étant configurés pour coopérer avec ledit pion lors de l'assemblage de la roue dentée avec le système d'embiellage pour faciliter l'insertion du pion dans l'orifice.

2. Roue dentée (116) selon la revendication précédente, dans laquelle elle comprend, au niveau de ladite première face, un fût cylindrique (128) d'axe A entouré par une couronne dentée (130, 131) et reliée à cette dernière par des nervures (134).

3. Roue dentée (116) selon la revendication 1 ou 2, dans laquelle les moyens de butée comprennent des premiers moyens (128a) de butée en direction radiale.

4. Roue dentée (116) selon les revendications 2 et 3, dans laquelle les premiers moyens de butée (128a) sont formés par ou situés sur ledit fût (128).

5. Roue dentée (116) selon l'une des revendications précédentes, dans laquelle les moyens de butée comprennent des deuxièmes moyens (154a) de butée en direction axiale,
les deuxièmes moyens de butée (154a) étant de préférence formés par une nervure de butée (154).

6. Roue dentée (116) selon l'une des revendications précédentes, dans laquelle les moyens de butée comprennent des troisièmes moyens (150a) de butée en direction circonférentielle, les troisièmes moyens de butée (150a) étant de préférence formés par le fond d'un berceau (150) de forme générale en C ou U.

7. Roue dentée (116) selon l'une des revendications précédentes, dans laquelle les moyens de guidage comprennent une première surface cylindrique externe (128a) s'étendant autour dudit axe A ou une portion d'une telle surface.

8. Roue dentée (116) selon les revendications 2 et 7, dans laquelle la première surface (128a) est formée par ou située sur ledit fût (128).

9. Roue dentée (116) selon l'une des revendications précédentes, dans laquelle les moyens de guidage comprennent une deuxième surface plane (154a) sensiblement perpendiculaire audit axe A.

10. Roue dentée (116) selon la revendication précédente, prise en combinaison avec la revendication 5, dans laquelle la deuxième surface (154a) est formée par ou située sur ladite nervure de butée (154).

11. Roue dentée (116) selon l'une des revendications précédentes, dans laquelle les moyens de guidage comprennent une troisième surface cylindrique interne (152a) s'étendant autour dudit axe A ou une portion d'une telle surface, la troisième surface (152a) étant de préférence formée par ou située sur une nervure de guidage (152).

12. Roue dentée selon la revendication précédente, dans laquelle ledit organe central est ou comprend un deuxième orifice (120).

13. Motoréducteur (10) d'essuie-glace, en particulier de véhicule automobile, comprenant au moins une roue dentée (116) selon l'une des revendications précédentes.

14. Système d'essuyage (200) d'une vitre (202), en particulier de véhicule automobile (204), comprenant au moins une roue dentée (116) selon l'une des revendications 1 à 12 ou un motoréducteur (10) selon la revendication précédente.

15. Procédé d'assemblage d'un ensemble comportant une roue dentée (116) selon l'une des revendications 1 à 12 et un système d'embiellage (38) pour un motoréducteur (10) d'essuie-glace, en particulier de véhicule automobile, comprenant les étapes consistant à :
a) déplacer un des éléments parmi le système d'embiellage et la roue dentée vers l'autre des éléments, par translation axiale et/ou radiale vis-à-vis de l'axe A, depuis une première position espacée dans laquelle l'axe C du pion (26) dudit système est sensiblement parallèle à l'axe A, jusqu'à une deuxième position de contact dans laquelle ledit pion est en contact axial et/ou radial contre lesdits moyens de butée, ledit pion (26) étant de préférence en contact radial et axial contre la roue dentée (116) dans la deuxième position,
b) déplacer un de ces éléments en rotation autour de l'axe A par rapport à l'autre des éléments, par glissement du pion sur lesdits moyens de guidage, depuis la deuxième position précitée jusqu'à une troisième position dans laquelle les axes B et C sont confondus, et
c) déplacer un de ces éléments vers l'autre des éléments, par translation axiale vis-à-vis de l'axe A, depuis la troisième position jusqu'à une quatrième position dans laquelle le pion est engagé dans ledit orifice.

## Patentansprüche

1. Zahnrad (116) für einen Getriebemotor (10) eines Scheibenwischers, insbesondere eines Kraftfahrzeugs, wobei dieses Zahnrad ein zentrales Organ (120, 128), das eine Drehachse A definiert, und zwei einander gegenüberliegende, im Wesentlichen parallele Seiten aufweist, wobei eine erste der Seiten eine Öffnung (124) mit einer Achse B aufweist, die dazu bestimmt ist, einen Bolzen (26) eines Kurbeltriebsystems (38) des Getriebemotors aufzunehmen, **dadurch gekennzeichnet, dass** es an der ersten Seite Anschlagmittel (128a, 154a) in einer axialen Richtung und/oder in einer radialen Richtung in Bezug auf die Achse A und Mittel (128a, 154a, 152a) zur Führung durch Gleiten in einer Umfangsrichtung um die Achse A umfasst, wobei die Anschlag- und die Führungsmittel dafür ausgelegt sind, mit dem Bolzen beim Zusammenbau des Zahnrades mit dem Kurbeltriebsystem zusammenzuwirken, um das Einsetzen des Bolzens in die Öffnung zu erleichtern.

2. Zahnrad (116) nach dem vorhergehenden Anspruch, wobei es an der ersten Seite eine zylindrische Hülse (128) mit der Achse A umfasst, die von einem Zahnkranz (130, 131) umgeben ist und mit diesem Letzteren durch Rippen (134) verbunden ist.

3. Zahnrad (116) nach Anspruch 1 oder 2, wobei die Anschlagmittel erste Mittel (128a) zum Anschlag in radialer Richtung umfassen.

4. Zahnrad (116) nach den Ansprüchen 2 und 3, wobei die ersten Anschlagmittel (128a) von der Hülse (128) gebildet werden oder sich auf ihr befinden.

5. Zahnrad (116) nach einem der vorhergehenden Ansprüche, wobei die Anschlagmittel zweite Mittel (154a) zum Anschlag in axialer Richtung umfassen, wobei die zweiten Anschlagmittel (154a) vorzugsweise von einer Anschlagrippe (154) gebildet werden.

6. Zahnrad (116) nach einem der vorhergehenden Ansprüche, wobei die Anschlagmittel dritte Mittel (150a) zum Anschlag in Umfangsrichtung umfassen, wobei die dritten Anschlagmittel (150a) vorzugsweise vom Boden einer im Wesentlichen C- oder U-förmigen Wiege (150) gebildet werden.

7. Zahnrad (116) nach einem der vorhergehenden Ansprüche, wobei die Führungsmittel eine äußere zylindrische erste Fläche (128a), die sich um die Achse A herum erstreckt, oder einen Abschnitt einer solchen Fläche umfassen.

8. Zahnrad (116) nach den Ansprüchen 2 und 7, wobei die erste Fläche (128a) von der Hülse (128) gebildet wird oder sich auf ihr befindet.

9. Zahnrad (116) nach einem der vorhergehenden Ansprüche, wobei die Führungsmittel eine ebene zweite Fläche (154a) umfassen, die im Wesentlichen senkrecht zur Achse A ist.

10. Zahnrad (116) nach dem vorhergehenden Anspruch in Kombination mit Anspruch 5, wobei die zweite Fläche (154a) von der Anschlagrippe (154) gebildet wird oder sich auf ihr befindet.

11. Zahnrad (116) nach einem der vorhergehenden Ansprüche, wobei die Führungsmittel eine innere zylindrische dritte Fläche (152a), die sich um die Achse A herum erstreckt, oder einen Abschnitt einer solchen Fläche umfassen, wobei die dritte Fläche (152a) vorzugsweise von einer Führungsrippe (152) gebildet wird oder sich auf ihr befindet.

12. Zahnrad nach dem vorhergehenden Anspruch, wobei das zentrale Organ eine zweite Öffnung (120) ist oder umfasst.

13. Getriebemotor (10) eines Scheibenwischers, insbesondere eines Kraftfahrzeugs, welcher wenigstens ein Zahnrad (116) nach einem der vorhergehenden Ansprüche umfasst.

14. Wischsystem (200) für eine Glasscheibe (202), insbesondere eines Kraftfahrzeugs (204), welches wenigstens ein Zahnrad (116) nach einem der Ansprüche 1 bis 12 oder einen Getriebemotor (10) nach dem vorhergehenden Anspruch umfasst.

15. Verfahren zum Zusammenbau einer Anordnung, welche ein Zahnrad (116) nach einem der Ansprüche 1 bis 12 und ein Kurbeltriebsystem (38) für einen Getriebemotor (10) eines Scheibenwischers, insbesondere eines Kraftfahrzeugs, aufweist, welches die folgenden Schritte umfasst:
a) Bewegen eines der Elemente Kurbeltriebsystem und Zahnrad zum anderen der Elemente hin durch axiale und/oder radiale Translation in Bezug auf die Achse A von einer ersten, beabstandeten Position, in welcher die Achse C des Bolzens (26) des Systems im Wesentlichen parallel zur Achse A ist, bis zu einer zweiten Position des Kontakts, in welcher sich der Bolzen in axialem und/oder radialem Kontakt mit den Anschlagmitteln befindet, wobei sich der Bolzen (26) in der zweiten Position vorzugsweise in radialem und axialem Kontakt mit dem Zahnrad (116) befindet,
b) Bewegen eines dieser Elemente durch Drehung um die Achse A in Bezug auf das andere der Elemente, durch Gleiten des Bolzens auf den Führungsmitteln, von der oben genannten zweiten Position bis zu einer dritten Position, in welcher die Achsen B und C zusammenfallen, und
c) Bewegen eines dieser Elemente zum anderen der Elemente hin durch axiale Translation in Bezug auf die Achse A von der dritten Position bis zu einer vierten Position, in welcher der Bolzen in die Öffnung eingesetzt ist.

## Claims

1. Toothed wheel (116) for a gear motor (10) of a window wiper, in particular of a motor vehicle, this wheel having a central member (120, 128) defining an axis of rotation A and two opposite substantially parallel faces, a first of said faces including an orifice (124) having an axis B and intended to receive a pin (26) of a linkage (38) of the gear motor, **characterized in that** it comprises, on said first face, abutment means (128a, 154a) in an axial direction and/or in a radial direction relative to axis A and means (128a, 154a, 152a) for guiding sliding in a circumferential direction about the axis A, said abutment and guide means being configured to cooperate with said pin during the assembly of the toothed wheel with the linkage in order to facilitate the insertion of the pin into the orifice.

2. Toothed wheel (116) according to the preceding claim comprising on said first face a cylindrical bush (128) having an axis A surrounded by a toothed ring (130, 131) and connected to the latter by ribs (134).

3. Toothed wheel (116) according to Claim 1 or 2 in which the abutment means comprise radial first abutment means (128a).

4. Toothed wheel (116) according to Claims 2 and 3 in which the first abutment means (128a) are formed by or situated on said bush (128).

5. Toothed wheel (116) according to any one of the preceding claims in which the abutment means comprise axial second abutment means (154a), the second abutment means (154a) preferably being formed by an abutment rib (154) .

6. Toothed wheel (116) according to any one of the preceding claims in which the abutment means comprise circumferential third abutment means (150a), the third abutment means (150a) preferably being formed by the bottom of a cradle (150) having a C or U general shape.

7. Toothed wheel (116) according to any one of the preceding claims in which the guide means comprise an external cylindrical first surface (128a) extending around said axis A or a portion of such a surface.

8. Toothed wheel (116) according to Claims 2 and 7 in which the first surface (128a) is formed by or situated on said bush (128).

9. Toothed wheel (116) according to any one of the preceding claims in which the guide means comprise a plane second surface (154a) substantially perpendicular to said axis A.

10. Toothed wheel (116) according to the preceding claim in combination with Claim 5 in which the second surface (154a) is formed by or situated on said abutment rib (154).

11. Toothed wheel (116) according to any one of the preceding claims in which the guide means comprise an internal cylindrical third surface (152a) extending around said axis A or a portion of such a surface, the third surface (152a) preferably being formed by or situated on a guide rib (152).

12. Toothed wheel according to the preceding claim in which said central member is or comprises a second orifice (120).

13. Window wiper gear motor (10), in particular for motor vehicles, comprising at least one toothed wheel (116) according to any one of the preceding claims.

14. System (200) for wiping a window (202), in particular of a motor vehicle (204), comprising at least one toothed wheel (116) according to any one of Claims 1 to 12 or a gear motor (10) according to the preceding claim.

15. Method of assembling an assembly including a toothed wheel (116) according to any one of Claims 1 to 12 and a linkage (38) for a window wiper gear motor (10), in particular for motor vehicles, comprising the steps consisting in:
a) moving one of the elements comprising the linkage and the toothed wheel toward the other of the elements by axial and/or radial movement in translation relative to the axis A from a spaced first position in which the axis C of the pin (26) of said system is substantially parallel to the axis A to a contact second position in which said pin is in axial and/or radial contact against said abutment means, said pin (26) preferably being in radial and axial contact against the toothed wheel (116) in the second position,
b) moving one of these elements in rotation about the axis A relative to the other of the elements by sliding the pin on said guide means from the aforementioned second position to a third position in which the axes B and C coincide, and
c) moving one of these elements toward the other of the elements by axial movement in translation relative to the axis A from the third position to a fourth position in which the pin is engaged in said orifice.
